# EUROPEAN PATENT APPLICATION

(11) **EP 2 070 980 A2**
(43) Date of publication of application: **17.06.2009**
(21) Application number: 08021386.1
(22) Date of filing: 09.12.2008
(51) Int. Cl.: C08L 27/06, C08K 5/1515

(54) **Primary PVC plasticizers derived from vegetable oils, process for obtaining primary PVC plasticizers derived from vegetable oils and plasticized PVC composition**

(30) Priority: 10.12.2007 BR PI0705276
(71) Applicant: Nexoleum Bioderivados Ltda., 07170-350 Cotia SP (BR)
(72) Inventor: Vianna de Quadros Junior, Jacyr, Sao Paulo, Capital, CEP 04515-030 (BR); Augusto de Carvalho, José, Sao Paulo, Capital, CEP 05462-001 (BR)
(74) Representative: Grünecker, Kinkeldey, Stockmair & Schwanhäusser Anwaltssozietät

(57) **Abstract**

The present descriptive report refers to a patent of invention of primary PVC plasticizers composed of epoxidized ethyl and/or isoamyl esters of vegetable oil fatty acids and to the compounds of PVC plasticized with epoxidized bioesters, belonging to the technical field of polymer additives, developed from renewable sources such as vegetable oils and sugar cane, to reduce the cost and improve the properties of PVC compounds. The epoxidized bioesters are suitable to be added to at least one PVC resin and are obtained from a transesterification reaction of at least one type of vegetable oil with ethanol or isoamylic alcohol and subsequent epoxidation, presenting oxirane index equal to or less than 8. These primary plasticizers provide improvements to the properties of the compounded PVC not foreseen in the state of the art, such as better physical properties at low temperatures, greater flexibility of the final compound, higher mixing efficiency of the resin, improved resistance to aliphatic solvents extraction and improved resistance to UV degradation.

## Description

The present descriptive report refers to a patent of invention of PVC plasticizers composed of ethyl and/or isoamyl esters of vegetable oil fatty acids, obtained by transesterification and epoxidation and PVC compounds plasticized with bioesters, belonging to the technical field of polymer additives that were developed to improve the properties of PVC polymers, in addition to providing a lower cost for renewable compounds, such as those obtained with the use of vegetable oils.

Polyvinyl chloride (PVC) is a polymer well known for its wide range of industrial applications. Its natural rigidity, due to its molecular structure, requires the use of some additives to increase the range of useful applications. These compositions are commonly known as PVC compounds.

Among known compounds, plasticized PVC compounds present high flexibility and are used in films, wire and cable insulation, packaging, hoses, toys, etc. Plasticized PVC compounds are obtained by the addition, in different levels, of additives known as plasticizers, to provide the desired flexibility.

Plasticizers are, in general, high boiling point liquids with average molecular weight (between 300 and 600), linear or cyclic carbon chains (14 to 40 carbons) that, when added to the PVC resin allow for movement between the PVC molecules promoting flexibility to the final compound.

Currently, the major primary plasticizers used in the industry are the phthalates, obtained from petroleum. In addition to being dependent on the fluctuations of petroleum prices, phthalates are suspect of having adverse effects on human health.

As a result, a search was initiated to find alternatives that are technically and economically viable to replace petroleum based plasticizers. Epoxidized soybean oil was proposed as a primary plasticizer. However, its low compatibility with PVC limited its use to small quantities, keeping it from completely replacing phthalates as a primary plasticizer.

Another proposition was the use of epoxidized linseed oil, that in spite of having a similar molecular weight to soybean oil presents a higher oxirane index (8 to 12) and thus greater compatibility with PVC. However, its use is severely restricted due to its higher price.

As such, several initiatives have proposed the use of epoxidized bioesters, obtained from the transesterification or interesterification of vegetable oils combined with epoxidation, as primary plasticizers for PVC. Patent GB934689 describes the preparation of esters with high oxirane index (8,5 to 12,33) from vegetable oils with high linolenic acid contents (such as linseed oil) and high iodine index (175 to 200), that are transesterified with lower alcohols and subsequently epoxidized. Patents US 4.421.886 and US 5.886.072 propose the use of esters of soybean oil transesterified with pentaeritritol, whereas the latter patent proposes the use of these esters in a mixture with other plasticizers. Patent US 4.605.694 describes the use of trimelitic acid and pentaeritritol esters, while the patent US 5.430.108 proposes the use of esters of pentaeritritol with alcanoic acid. Finally, the Brazilian patent application BR 0111905-2 describes the use of soybean oil transesterified with methanol, ethylene glycol, propylene glycol, pentaeritritol, saccharose, and interesterified linseed oil.

Some of these esters (obtained from pentaeritritol, trimelitic acid, ethylene glycol, propylene glycol and interesterified linseed oil) as plasticizers present the drawback of having larger molecular weight and much higher cost when compared to phthalates. Others obtained from methanol, still have a price dependency on petroleum. Additionally, the proposed esters are composed by mixtures of esters with oxirane indexes greater than 8. Finally, with exception of the methanol esters, the other types of esters have been used as primary plasticizers for PVC only in laboratory tests, indicating the difficulty in obtaining an additive that is both technically and economically viable.

Therefore, the objective of the present invention is to obtain technically and economically viable alternatives of primary plasticizers for PVC compounds derived exclusively from renewable sources (vegetable oils, sugar cane ethanol and sugar cane isoamylic alcohol) that are completely compatible with the PVC resin.

With the purpose of overcoming the aforementioned problems and complying with the objectives previously described, the invention developed compositions of plasticizers obtained from the complete transesterification and epoxidation of vegetable oils, henceforth called epoxidized bioesters. Complete transesterification and epoxidation occur when the reactions achieve a minimum of 99% conversion. This invention differs from the state of the art by providing epoxidized bioester plasticizers, presenting low linolenic acid content, and oxirane indexes below 8. The epoxidized bioesters are obtained by the transesterification reaction of vegetable oils with mono-alcohols derived from sugar cane, such as ethanol and isoamylic alcohol, and subsequent epoxidation.

Vegetable oils are composed by triglycerides that contain glycerin molecules attached to three saturated, mono-unsaturated, di-unsaturated and tri-unsaturated acids such as palmitic, oleic, linoleic, and linolenic acids, among others. These fatty acids vary also in regards to the size of the carbon chain, presenting 14 to 18 carbon atoms for the oils referred in this invention.

The transesterification reaction of vegetable oils is employed to separate these fatty acids from the glycerin molecule and bond them to other alcohol molecules, providing superior properties when compared to those of the triglyceride. The transesterification reaction results in the formation of different esters (depending on the type of alcohol used), with a common alcohol termination. This wide range of ester varieties increases the possibilities of compatibility with PVC, in addition to allowing different properties in the plasticized PVC.

The epoxidation process, of public domain, introduces an atom of oxygen in the double bonds of the fatty acid carbon chain, forming an oxirane ring that makes the ester more polar and thus more compatible with the PVC resin. The greater the number of double bonds in the original ester, the greater the number of oxirane rings formed, and therefore increased compatibility with PVC. In addition, the substitution of the double bonds by the oxirane ring in the fatty acid chains increases the chemical and thermal stability of the resulting molecule.

The compatibility of the epoxidized bioesters with the PVC resin depends on the unsaturation of the original esters and the level of epoxidation of the double bonds. The bioesters of this invention present compatibility with PVC even when the resulting oxirane index is below 8, which is not foreseen in the current state of the art.

In a preferred embodiment the bioesters are obtained by the transesterification of a mixture of vegetable oils or one vegetable oil, such as soybean oil, with ethanol. After obtained, the bioesters are epoxidized. The vegetable oils are chosen among the oils with an iodine index between 120 and 170, such as soybean oil, corn oil, linseed oil, sunflower oil, or a mixture thereof.

In the transesterification reaction, the refined soybean oil reacts with anhydrous ethanol in the presence of sodium ethoxide based catalysts, in the molar proportion oil:alcohol of 1:10 to 1:30 and temperatures between 80°C and 120°C. The glycerin formed in the reaction is separated and the soybean oil ethyl ester is obtained (ethyl soyate) with a high degree of purity. The new ester is then submitted to the epoxidation reaction, where the double bonds of the esters are broken in the presence of free oxygen under specific temperature and mixing condition to form the oxirane rings.

Another embodiment is the production of bioesters from the transesterification of a mixture of vegetable oils or one vegetable oil, with iodine index between 120 and 170 such as soybean oil, with isoamylic alcohol. The isoamylic alcohol is obtained from the residue of sugar cane based ethanol production (also known as fusel oil). After formed, the bioesters are epoxidized. The vegetable oils are chosen among the oils with an iodine index between 120 and 170, such as soybean oil, corn oil, linseed oil, sunflower oil, or a mixture thereof.

The transesterification process is similar to that used in the production of ethyl soyate, replacing the catalyst system by alkyl sodium oxides, and molar proportions oil:alcohol of 1:15 to 1:50 and temperatures in the range between 80°C and 130°C. The resulting ester is submitted to the same epoxidation process used in the production of the epoxidized ethyl soyate.

The processes of preparation of the epoxidized ethyl and isoamyl bioesters are detailed below.

### 1 - EPOXIDIZED ETHYL SOYATE

TRANSESTERIFICATION REACTION: First, 35g of sodium hydroxide 99% (NaOH) are added to 200ml of anhydrous ethanol, forming sodium ethoxide in a stoichiometric quantity considering the sodium hydroxide amount, with excess ethanol. In a reactor with mechanical stirring, 1 liter of soybean oil is pre-heated to 60°C. The 200 ml of sodium/ethanol mixture plus an additional 300 ml of ethanol are added to the reactor. The stirring and temperature are maintained constant for 90 minutes. The reaction forms glycerin, soybean oil acids ethyl ester and excess ethanol and sodium ethoxide. After the reaction, the stirring and heating are turned off and the whole mixture is transferred to a separation funnel. After 10 hours decanting, the glycerin accumulated in the bottom is removed, leaving only the ester in the funnel. The ester is washed with water, adding 1 liter of water to the mixture, intense agitation without heating and subsequent decanting for 3 to 6 hours (depending on the speed of separation) until the two phases present a clear interface. The washing procedure is repeated with until the bottom phase is clear after decanting. The ester is then dried at 40°C for 2 to 4 hours until the material is clear and presents no cloudiness.

EPOXIDATION REACTION: In a reactor with mechanical stirring, temperature control and reflux condenser, 500g of the ethyl ester is added and the temperature is elevated to 80°C. Formic acid is added and the mixture is kept at constant agitation. Slowly (for 45 minutes or more) 184 g of hydrogen peroxide 50% is added, controlling the temperature at 90°C. After the addition of the hydrogen peroxide, the system is maintained at 80° for 4 hours. At the end of the reaction, the water phase is separated from the oil phase in a separation funnel. The oil phase contains the epoxidized ester and the formic acid. The wash of the oil phase is processed according to the procedure described for the wash of the ethyl ester after the transesterification; although the water needs to be preheated to 50°C and the wash procedure shall be repeated until all the formic acid has been eliminated. The finished product present an oxirane index above 4.5, acidity below 5 mg KOH/g, characteristic odor and slight yellow color.

The final product obtained is the epoxidized ethyl ester of a mixture of soybean oil acids (epoxidized ethyl soyate), which is a viscous transparent liquid slightly yellow and with a faint odor similar in characteristic to the original soybean oil used. The epoxidized ethyl ester presents an oxirane index between 4 and 8, linear molecular chain with an average (20 carbon atoms) and lower average molecular weight (about 340) when compared to the epoxidized soybean oil (900).

The composition of the epoxidized ethyl soyate presents the following formula:

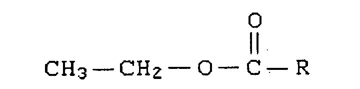

With R preferably selected randomly from the epoxidized oleic, linoleic and linolenic acids.

### 2 - EPOXIDIZED ISOAMYL SOYATE

TRANSESTERIFICATION REACTION: Initially, 35 g of sodium hydroxide 99% are added to 200 ml of isoamylic alcohol, forming sodium isoamyloxide in a stoichiometric quantity related to the sodium hydroxide, with excess isoamylic alcohol. In a reactor with mechanical agitation, 1 liter of soybean oil is preheated to 80°C and the previously prepared alcohol and sodium hydroxide are added to the reactor, with an additional 1600 ml of isoamylic alcohol. The stirring and temperature are maintained constant for 120 minutes. The reaction produces glycerin, isoamyl ester of soybean oil fatty acids, excess of non-reacted isoamylic alcohol, and sodium isoamyloxide. After the reaction, the stirring and heating are turned off and the entire mixture is transferred to separation funnel. After 10 hours decanting the glycerin is removed from the funnel, leaving only the ester. The isoamyl ester is then washed with water, adding 1 liter of water at 70°C to the mixture, intense stirring and subsequent decanting for 3 to 6 hours (depending on the speed of separation) until a clear interface appears. The aqueous phase is removed from the funnel and the wash is repeated until the material in the aqueous phase is clear. The ester is dried by heating at 70°C, for 2 to 4 hours until the material becomes totally clear, without cloudiness.

EPOXIDATION REACTION: In a reactor with mechanical stirring, temperature control and reflux condenser, 500g of the isoamyl ester is added and the temperature is elevated to 80°C. 60g of formic acid (91%) is added and the mixture is kept at a constant agitation. Slowly (along 45 minutes or more) 178 g of hydrogen peroxide (50%) is added, controlling the temperature at 90°C. After the addition of the hydrogen peroxide, the system is maintained at 80° for 4 hours. At the end of the reaction, the water phase is separated from the oil phase in a separation funnel. The oil phase contains the epoxidized ester and the formic acid. The wash of the oil phase is processed according to the procedure described for the wash of the ethyl ester after the transesterification, although the water needs to be preheated to 50°C and the wash procedure shall be repeated until all the formic acid has been eliminated. The finished product presents an oxirane index above 4.5, acidity below 5 mg KOH/g, characteristic odor, and slight yellow color.

The final product obtained is the epoxidized isoamyl ester (epoxidized isoamyl soyate) of a mixture of soybean oil acids, which is a viscous transparent liquid slightly yellow and with a faint odor similar in characteristic to the original soybean oil used. The epoxidized isoamyl soyate presents an oxirane index between 4 and 8, linear molecular chain with average (23 carbon atoms) and lower average molecular weight (380) when compared to the epoxidized soybean oil.

The plasticizers of epoxidized isoamyl soyate present the following formula:

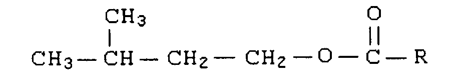

R is preferably selected randomly from the epoxidized oleic, linoleic, and linolenic acid groups.

In another embodiment, plasticized PVC is obtained by mixing i) 100 parts (weight/weight) of at least one type of PVC resin; ii) 1 to 200 parts (weight/weight) of plasticizer, which consists of epoxidized bioesters with an oxirane index below 8; the mixture is then homogenized and later extruded.

In a preferred embodiment the plasticizer is made from vegetable oils completely transesterified with ethanol and later epoxidized, such as the esters of the type epoxidized ethyl soyate. In another preferred embodiment the plasticizer is made from vegetable oils completely transesterified with isoamylic alcohol and later epoxidized, such as the esters of the type epoxidized isoamyl soyate. In another preferred embodiment the plasticizer is made from a mixture of epoxidized ethanol and isoamylic alcohol bioesters, such as epoxidized ethyl soyate and epoxidized isoamyl soyate.

The plasticized PVC is therefore free of phthalate plasticizers. It is important to point out that the plasticizers composed of epoxidized bioesters of ethanol and/or isoamylic alcohol provide some property improvements to the plasticized PVC, improvements not foreseen in the state of the art, such as greater flexibility, greater resistance to UV light degradation, better physical properties at low temperatures, better mixture efficiency (solvation) of the PVC resin and better resistance to aliphatic solvents extraction.

PVC compounds plasticized with the objects of this invention present superiority in all these properties when compared to plasticized PVC prepared with plasticizers revealed by the state of the art while keeping the same proportion of plasticizer/PVC resin.

When compared to the epoxidized ethyl soyate, the epoxidized isoamyl soyate has a heavier and longer carbon chain, allowing for its use in applications requiring greater permanence over time.

Therefore, the plasticizers of this invention work out the inconveniencies described in the state of the art, presenting the following additional advantages:
1. Can be produced from natural, renewable and economically viable sources (sugar cane and soybean oil), in addition to being adequate to human contact;
2. Are totally compatible with the PVC resin, when compared to the epoxidized soybean oil;
3. Present less odor and coloration when compared to the epoxidized soybean oil;
4. Present competitive costs when compared to all primary plasticizers and significantly lower costs when compared to the current alternatives to replace phthalates (trimelitates, citrates, polimerics);
5. Provide better plasticization efficiency in the PVC compound when compared to the current primary plasticizers alternatives or the majority of the developments of the state of the art, producing lighter and more flexible compounds with less plasticizers;
6. Offer better mixture efficiency (solvation) with the PVC resin, when compared to the current alternatives or plasticizers revealed by the state of the art, allowing more efficient production processes for the PVC industry;
7. Aid in the thermal stabilization of PVC, allowing more processing tolerance or cost reduction of the stabilizers package, when compared to the current alternatives of primary plasticizers;
8. Offer better UV resistance to the PVC compound allowing the use of PVC compounds for longer periods or cost reduction of the UV protection additive packages, when compared to the current primary plasticizers alternatives;
9. Provide better physical properties at low temperatures, when compared to the current primary plasticizers alternatives based on phthalates;
10. Provide better resistance to aliphatic solvent extraction, when compared to current alternatives of primary plasticizers, mainly phthalates;

In summary, the objects of this invention present complementary benefits and additional advantages that are not foreseen by the state of the art.

The scope of this patent of invention shall not be limited to the described applications, but to the terms defined in the claims and its equivalents.

## Claims

1. PRIMARY PVC PLASTICIZERS DERIVED FROM VEGETABLE OILS, **characterized by** presenting the general formula: 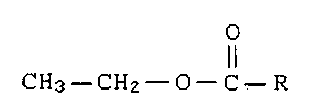 Wherein R is selected randomly from the group of epoxidized oleic, linolenic and linoleic acid.

2. PRIMARY PVC PLASTICIZERS DERIVED FROM VEGETABLE OILS, according to claim 1, **characterized by** the fact that said plasticizer is epoxidized ethyl ester.

3. PRIMARY PVC PLASTICIZERS DERIVED FROM VEGETABLE OILS, according to claim 2, **characterized by** the fact that said plasticizer is epoxidized ethyl soyate.

4. PRIMARY PVC PLASTICIZERS DERIVED FROM VEGETABLE OILS, according to claims 1 to 3, **characterized by** the fact that said plasticizer presents oxirane index equal to or less than 8.

5. PROCESS FOR OBTAINING PRIMARY PVC PLASTICIZERS DERIVED FROM VEGETABLE OILS, as defined in claim 1, **characterized by** comprising the steps of:
complete transesterification of at least one vegetable oil with ethanol;
subsequent epoxidation of the ester obtained at the step of transesterification.

6. PROCESS, according to claim 5, **characterized by** the fact that said vegetable oil is selected from soybean oil, corn oil, linseed oil, sunflower oil, or a mixture thereof.

7. PROCESS, according to claim 6, **characterized** y the fact that said vegetable oil is soybean oil.

8. PRIMARY PVC PLASTICIZERS DERIVED FROM VEGETABLE OILS, **characterized by** presenting the general formula: 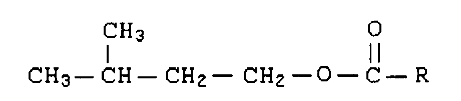 wherein R is randomly selected from the group of epoxidized oleic, linoleic and linolenic acids.

9. PRIMARY PVC PLASTICIZERS DERIVED FROM VEGETABLE OILS, according to claim 8, **characterized by** the fact that said plasticizer is epoxidized isoamylic ester.

10. PRIMARY PVC PLASTICIZERS DERIVED FROM VEGETABLE OILS, according to claim 8, **characterized by** the fact that said plasticizer is epoxidized isoamyl soyate.

11. PRIMARY PVC PLASTICIZERS DERIVED FROM VEGETABLE OILS, according to claims 8 to 10, **characterized by** the fact that said plasticizer presents oxirane index equal to or less than 8.

12. PROCESS FOR OBTAINING PRIMARY PVC PLASTICIZERS DERIVED FROM VEGETABLE OILS, as defined in claim 8, **characterized by** comprising the steps of:
complete transesterification of at least one vegetable oil with isoamylic alcohol;
subsequent epoxidation of the ester obtained at the step of transesterification.

13. PROCESS, according to claim 12, **characterized by** the fact that said vegetable oil is selected from soybean oil, corn oil, linseed oil, sunflower oil, or a mixture thereof.

14. PROCESS, according to claim 13, **characterized by** that fact that said vegetable oil is soybean oil.

15. PLASTICIZED PVC COMPOSITION, **characterized by** comprising:
i) 100 parts (weight/weight) of at least one PVC resin;
ii) 1 to 200 parts weight/weight) of at least one ester as defined in claim 1.

16. PLASTICIZED PVC COMPOSITION, **characterized by** comprising:
i) 100 parts (weight/weight) of at least one PVC resin;
ii) 1 to 200 parts weight/weight) of at least one ester as defined in claim 9.
